Europäisches Patentamt

European Patent Office

Office européen des brevets

(11) Numéro de publication : **0 382 638 B1**

## (12) FASCICULE DE BREVET EUROPEEN

(45) Date de publication du fascicule du brevet :
30.12.92 Bulletin 92/53

(51) Int. Cl.$^5$ : **F16B 37/06, F16B 19/10**

(21) Numéro de dépôt : **90400339.9**

(22) Date de dépôt : **07.02.90**

(54) **Ecrou à montage en aveugle et par sertissage sur une paroi quelconque.**

(30) Priorité : **08.02.89 FR 8901630**

(43) Date de publication de la demande :
**16.08.90 Bulletin 90/33**

(45) Mention de la délivrance du brevet :
**30.12.92 Bulletin 92/53**

(84) Etats contractants désignés :
**BE DE**

(56) Documents cités :
**DE-C- 706 192**
**DE-U- 8 806 441**
**US-A- 2 612 073**
**US-A- 3 451 303**

(73) Titulaire : **RAPID S.A.**
**251 Boulevard Péreire**
**F-75852 Paris Cédex 17 (FR)**

(72) Inventeur : **Dubost, Dominique**
**53 Résidence Elysées II**
**F-78170 La Celle Saint Cloud (FR)**

(74) Mandataire : **Durand, Yves Armand Louis et al**
**CABINET WEINSTEIN 20, Avenue de**
**Friedland**
**F-75008 Paris (FR)**

EP 0 382 638 B1

## Description

La présente invention a essentiellement pour objet un écrou à montage en aveugle et par sertissage sur une paroi quelconque et telle que par exemple un panneau, une plaque ou analogue.

On connaît déjà depuis longtemps des écrous répondant à la définition générale ci-dessus.

Plus précisément, ces écrous comportent un fût intérieurement fileté insérable dans l'orifice d'une paroi et muni d'une collerette permettant la retenue du fût sur la paroi après insertion, tandis qu'une tige est rendue axialement solidaire du fût pour permettre, par traction sur cette tige, le sertissage du fût sur la paroi. En d'autres termes, sous l'effet de la traction sur la tige, le fût se déforme suivant un bourrelet qui s'applique sur le dessous de la paroi, alors que la collerette du fût s'applique sur le dessus de ladite paroi.

Dans ce genre d'écrou, la tige est généralement une tige filetée qui est rendue axialement solidaire du fût par vissage dans le filetage intérieur de ce fût.

Mais une telle liaison tige-fût par filetages coopérants n'est pas sans présenter un certain nombre d'inconvénients.

Tout d'abord, la traction sur la tige filetée pour effectuer le sertissage risque d'endommager ou de déformer sérieusement le filetage intérieur du fût.

Il en résulte qu'après sertissage, la tige peut difficilement être retirée du fût par dévissage ou que après retrait de la tige il est difficile, sinon impossible, de visser dans le fût un élément fileté tel qu'une vis, de façon à réaliser la fixation d'un panneau par exemple sur le panneau comportant le fut serti.

Par ailleurs, le temps et donc le coût d'assemblage demeurent importants.

En effet, après avoir introduit le fût dans un panneau. il faut visser dans ce fût la tige filetée pour réaliser le sertissage, ce après quoi il faut dévisser cette tige pour pouvoir y visser l'élément fileté ou la vis réalisant l'assemblage des deux panneaux.

Il faut encore observer ici qu'il y a un risque de rupture de la tige filetée lors du sertissage sous l'effet de la traction exercée sur cette tige. Si cela se produit à proximité du filetage de la tige, ledit filetage restant prisonnier dans le fût sera, comme on le comprend, très difficile à extraire, à moins d'endommager le fût qui ne sera donc pas ré-utilisable.

On connait par ailleurs d'après le document US-A-2 612 073 un écrou correspondant au préambule de la revendication 1, mais dont la tige n'est pas initialement solidaire du fût qu'elle traverse axialement.

Aussi. la présente invention a pour but de remédier notamment à tous les inconvénients ci-dessus en proposant un écrou unitaire à montage en aveugle dont le filetage intérieur ne risque pas d'être endommagé par la tige et qui permet de réaliser rapidement des assemblages de panneaux, tôles ou analogues.

A cet effet, l'invention a pour objet un écrou à montage par sertissage sur une paroi quelconque et du type comprenant un fût insérable dans l'orifice d'une paroi et muni d'un filetage intérieur, tandis qu'une tige munie d'une tête traverse axialement le fût sans entrer en contact avec le filetage intérieur de celui-ci, pour permettre, par traction sur cette tige, le sertissage du fût sur la paroi, caractérisé en ce que la tête de la tige est initialement fixée à la partie extrême du fût par sertissage de cette partie extrême sur ladite tête.

Selon une autre caractéristique de l'invention, la partie du fût comportant le filetage intérieur précité est plus épaisse que la partie extrême du fût s'étendant au-delà du filetage intérieur de façon à réaliser un épaulement annulaire interne formant butée de retenue pour la tête de la tige.

Quant à la partie non filetée du fût prolongeant la partie comportant le filetage intérieur à l'opposé de la partie extrême du fût précitée, elle est, tout comme cette partie extrême, plus mince que ladite partie avec filetage intérieur, de façon à permettre le sertissage du fût sur la paroi.

Selon un mode de réalisation, la tête à l'extrémité de la tige présente une forme de tronc de cône dont la petite base est dirigée vers l'extérieur du fût et dont la grande base prend appui sur l'épaulement annulaire précité, tandis que la partie extrême précitée du fût est sertie sur la surface latérale du tronc de cône.

La tige précitée est avantageusement munie d'une gorge au niveau de son raccordement avec la tête de la tige pour créer ainsi une amorce de rupture de la tige en fin de sertissage du fût sur la paroi.

Mais d'autres caractéristiques et avantages de l'invention apparaîtront mieux dans la description détaillée qui suit et se réfère aux dessins annexés donnés uniquement à titre d'exemple, et dans lesquels :

La figure 1 est une vue en coupe axiale du fût d'un écrou conforme aux principes de l'invention.

La figure 2 est une vue en coupe axiale de la tige permettant le sertissage du fût sur une paroi.

La figure 3 est une vue en coupe axiale de la tige en position montée dans le fût.

La figure 4 est une vue en coupe axiale similaire à la figure 3 mais montrant l'écrou de l'invention dans son état fini et prêt à être utilisé.

La figure 5 montre l'écrou en position montée et sertie sur une paroi, telle qu'un panneau ; et

la figure 6 est une vue similaire à la figure 5, mais montrant la tige automatiquement séparée de l'écrou en fin de sertissage.

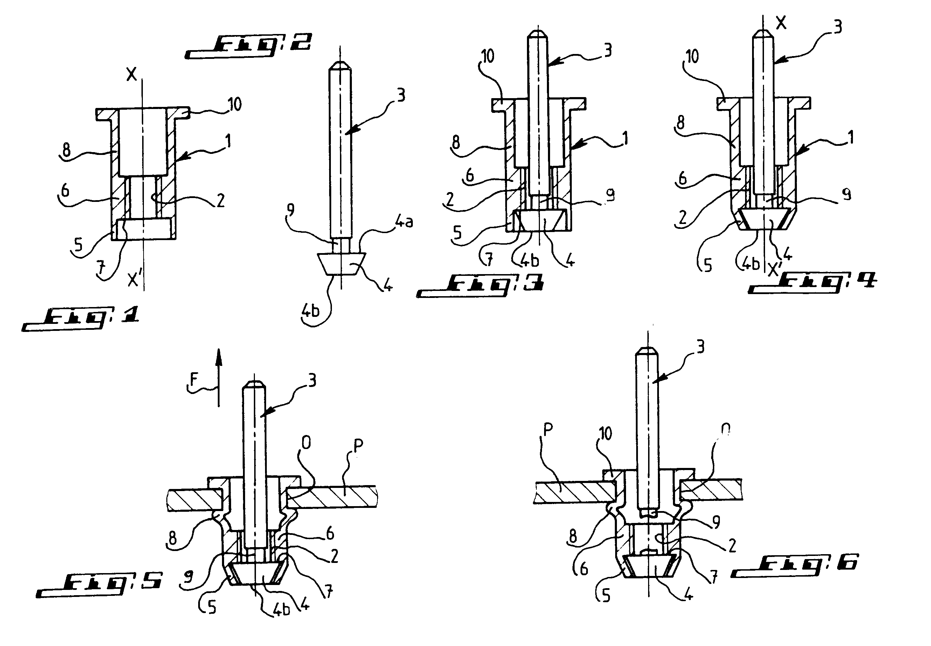

En se reportant plus particulièrement aux figures 1 à 4, on voit qu'un écrou conforme à cette invention comprend essentiellement un fût 1 muni d'un filetage intérieur 2, ainsi qu'une tige 3 montée axialement traversante dans le fût 1 sans entrer en contact avec le filetage intérieur 2 du fût et dont l'extrémité 4 est solidaire de la partie extrême 5 du fût 1 se situant au-delà du filetage intérieur 2.

Suivant l'exemple représenté, la partie extrême 5 du fût 1 est sertie sur la tête 4, comme on le voit bien sur la figure 4, cette tête 4 présentant une forme tronconique, mais pouvant présenter tout autre forme, sans sortir du cadre de l'invention, et telle que par exemple une forme sphérique ou cylindrique.

Il apparaît clairement sur la figure 4 que la partie extrême 5 du fût 1 est rabattue radialement vers l'axe X-X' du fût pour s'appliquer contre la surface latérale de la tête tronconique 4.

Comme on le voit bien sur les figures 1 et 3 à 6, la partie intermédiaire 6 du fût 1 comportant le filetage intérieur 2 est plus épaisse que la partie extrême 5 du fût 1, de sorte qu'un épaulement annulaire interne 7 est réalisé et constitue une butée de retenue pour la tête 4 de la tige 3, c'est-à-dire plus précisément, pour la grande base 4a du tronc de cône constituant la tête 4.

Tout comme la partie extrême 5 du fût 1, la partie 8 non filetée du fût 1, à l'opposé de ladite partie extrême 5 du fût, est plus mince que la partie 6 comportant le filetage intérieur 2. Ainsi, comme on l'expliquera plus loin à propos du fonctionnement, le sertissage de l'écrou pourra s'effectuer au moyen de la partie 8.

Dans l'exemple de réalisation représenté, et comme on le voit bien sur les figures 4 à 6, la petite base 4b du tronc de cône constituant la tête 4 de la tige 3 est dirigée vers l'extérieur du fût 1, tandis que la grande base 4a est dirigée vers l'intérieur du fût.

La tige 3, comme on le voit bien sur les figures 2 à 6 est munie d'une gorge 9 au niveau de son raccordement avec la tête 4, et cela pour créer une amorce de rupture de la tige 3 en fin de sertissage de l'écrou ou fût 1 sur une paroi qui peut être par exemple un panneau P.

Mais, pour une meilleure compréhension de l'invention, on expliquera brièvement ci-après comment s'effectue le montage de l'écrou sur un panneau P et, également, comment s'effectue l'assemblage de ce panneau avec par exemple un autre panneau.

La réalisation de l'écrou montré sur la figure 4 se déduit immédiatement des figures 1 à 3 et n'a pas besoin d'être décrite en détail. On insistera simplement ici sur le fait qu'après insertion de la tige 3 dans le fût 1, cette tige, du fait de la tête 4 centrée dans la partie extrême 5 du fût 1, n'entrera jamais en contact avec le filetage intérieur 2 dudit fût.

On introduit tout d'abord l'écrou de cette invention montré sur la figure 4, dans un orifice approprié O ménagé dans le panneau P et dont les dimensions correspondent au diamètre extérieur du fût 1.

L'écrou est retenu dans le panneau P grâce à une collerette extérieure 10 faisant suite à la partie 8 du fût 1.

Puis, à l'aide d'un outil approprié, tel qu'une pince spéciale, susceptible de prendre appui sur la collerette 10, on exerce une traction sur la tige 3, suivant la flèche F, de sorte que la partie 8 se déforme radialement vers l'extérieur et forme en quelque sorte un bourrelet prenant appui sous le panneau P. Ainsi, le bourrelet 8 d'une part et la collerette 10 d'autre part enserrent le bord de l'orifice O, de sorte que le fût 1 est serti sur ledit panneau, comme on le voit sur la figure 5.

En fin de sertissage, et comme on le voit sur la figure 6, la tige 3 se séparera automatiquement de la tête 4 grâce à la gorge 9 formant amorce de rupture.

La tige 3 étant mise au rebut, pour assembler un élément, tel qu'un autre panneau sur le panneau P, il suffira d'utiliser, comme on le comprend, une vis susceptible de coopérer avec le filetage intérieur 2 du fût 1 qui est dégagé et ne sera jamais endommagé par la tige 3 lors de l'opération de sertissage, tandis que la tête constitue en quelque sorte une tête perdue formant le fond de l'écrou qui constitue en quelque sorte un écrou borgne, après rupture de la tige 3.

Il est important d'observer encore une fois ici que, lors du sertissage de l'écrou sur le panneau P, la tige 3 ne risque pas d'endommager le filetage 2 du fût 1, ce filetage étant utilisé uniquement pour réaliser l'assemblage vissé des deux panneaux. En outre, du fait de l'épaisseur relative des parties 6 et 8 du fût 1, la déformation ou le sertissage par la partie 8 s'effectuera d'une manière géométriquement parfaite conduisant de ce fait à un sertissage parfait de l'écrou sur le panneau P.

On comprend également que le sertissage par tige perdue de l'écrou sur le panneau P peut s'effectuer très rapidement de même que l'assemblage vissé de deux éléments quelconques ou panneaux P.

Bien entendu l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant son esprit.

**Revendications**

1. Ecrou à montage par sertissage sur une paroi quelconque et du type comprenant un fût (1) insérable dans l'orifice (O) d'une paroi (P) et muni d'un filetage intérieur (2), tandis qu'une tige (3) munie d'une tête (4) traverse axialement le fût (1) sans entrer en contact avec le filetage intérieur (2) de celui-ci, pour permettre, par traction sur cette tige, le sertissage du fût (1) sur la paroi, caractérisé en ce que la tête (4) de la tige (3) est initialement fixée à la partie extrême (5) du fût (1) par sertissage de cette partie extrême sur ladite tête.

2. Ecrou selon la revendication 1, caractérisé en ce que la partie (6) du fût comportant le filetage intérieur précité (2) est plus épaisse que la partie extrême précitée (5) s'étendant au-delà du filetage intérieur (2) de façon à réaliser un épaulement annulaire interne (7) formant butée de retenue pour la tête (4) de la tige (3).

3. Ecrou selon la revendication 1 ou 2, caractérisé en ce que la partie (8) non filetée du fût (1) prolongeant la partie (6) comportant le filetage intérieur (2), à l'opposé de la partie extrême (5) du fût est, tout comme cette partie extrême, plus mince que ladite partie (6) avec filetage intérieur (2).

4. Ecrou selon l'une des revendications précédentes, caractérisé en ce que la tête précitée (4) présente une forme de tronc de cône dont la petite base (4b) est dirigée vers l'extérieur du fût (1) et dont la grande base (4a) prend appui sur l'épaulement annulaire précité (7), tandis que la partie extrême précitée (5) du fût (1) est sertie sur la face latérale du tronc de cône.

5. Ecrou selon l'une des revendications précédentes, caractérisé en ce que la tige précitée (3) est munie d'une gorge (9) au niveau de son raccordement avec la tête (4) de la tige (3) pour créer ainsi une amorce de rupture de la tige en fin de sertissage du fût (1) sur la paroi (P).

**Patentansprüche**

1. Mutter zur Anordnung durch Versicken an irgendeiner Wandung und der einen in die Oeffnung (0) einer Wandung (P) einfügbaren und mit einem Innengewinde (2) versehenen Schaft aufweisenden Gattung, während ein mit einem Kopf (4) versehener Stift (3) den Schaft (1) axial durchsetzt ohne mit dem Innengewinde (2) desselben in Berührung zu kommen, um durch Ziehen an diesem Stift, die Befestigung des Schaftes (1) durch Versicken an der Wandung zu gestatten, dadurch gekennzeichnet, dass der Kopf (4) des Stiftes (3) ursprünglich an dem Endteil (5) des Schaftes (1) durch Befestigung dieses Endteils durch Versicken an dem besagten Kopf befestigt ist.

2. Mutter nach Anspruch 1, dadurch gekennzeichnet, dass der das vorgenannte Innengewinde (2) aufweisende Teil (6) des Schaftes dicker als der sich über das Innengewinde (2) hinaus erstreckende vorgenannte Endteil (5) ist, um eine einen Zurückhaltungsanschlag für den Kopf (4) des Stiftes (3) bildende innere ringförmige Schulter (7) zu bilden.

3. Mutter nach Anspruch 1 oder 2, dadurch gekennzeichnet, dass der nicht mit Gewinde versehene und den mit dem Innengewinde (2) versehene Teil (6) verlängernde Teil (8) des Schaftes (1) in dem dem Endteil (5) des Schaftes entgegengesetzten Bereich, genau wie dieser Endteil dünner als der besagte Teil (6) mit Innengewinde (2) ist.

4. Mutter nach einem der vorangehenden Ansprüche, dadurch gekennzeichnet, dass der vorgenannte Kopf (4) die Gestalt eines Kegelstumpfes aufweist, dessen kleine Basis (4b) nach aussen des Schaftes (1) gerichtet ist und dessen grosse Basis (4a) sich an der vorgenannten ringförmigen Schulter (7) abstützt, während der vorgenannte Endteil (5) des Schaftes (1) an der Seitenfläche des Kegelstumpfes durch Versicken befestigt ist.

5. Mutter nach einem der vorangehenden Ansprüche, dadurch gekennzeichnet, dass der vorgenannte Stift (3) mit einer Nut (9) im Bereich seines Anschlusses an dem Kopf (4) des Stiftes (3) versehen ist, um somit einen Bruchausgangspunkt des Stiftes am Ende der Befestigung des Schaftes (1) durch Versicken an der Wandung (P) zu schaffen.

**Claims**

1. Nut for mounting by crimping onto any wall whatsoever and of the type comprising a shank (1) insertable into the opening (O) of a wall (P) and provided with an internal threading (2) whereas a rod (3) provided with a head (4) extends axially through the shank (1) without entering in contact with the internal threading (2) thereof to allow by a pull upon this rod the crimping of the shank (1) on the wall, characterized in that the head (4) of the rod (3) is initially fastened to the end portion (5) of the shank (1) through crimping of this end portion onto the said head.

2. Nut according to claim 1, characterized in that the portion (6) of the shank comprising the aforesaid inner threading (2) is thicker than the aforesaid end portion (5) extending beyond the inner threading (2) so as to provide an inner annular shoulder (7) forming a retaining stop for the head (4) of the rod (3).

3. Nut according to claim 1 or 2, characterized in that the non-threaded portion (8) of the shank (1) extending the portion (6) comprising the inner threading (2) opposite to the end portion (5) of the shank is quite like this end portion thinner than the said portion (6) with the internal threading (2).

4. Nut according to one of the foregoing claims, characterized in that the aforesaid head (4) exhibits the shape of a frustum of a cone the small base (4b) of which is directed outwards of the shank (1) and the great base (4a) of which is bearing upon the aforesaid annular shoulder (7) whereas the aforesaid end portion (5) of the shank (1) is crimped onto the side face of the frustum of a cone.

5. Nut according to one of the foregoing claims, characterized in that the aforesaid rod (3) is provided with a groove (9) at its connection with the head (4) of the rod (3) to thus create an incipient breaking of the rod at the end of the crimping of the shank (1) onto the wall (P).

Fig. 1

Fig. 2

Fig. 3

Fig. 4

Fig. 5

Fig. 6